(19) **Europäisches Patentamt / European Patent Office / Office européen des brevets**

(11) **EP 3 022 970 B1**

(12) **FASCICULE DE BREVET EUROPEEN**

(45) Date de publication et mention
de la délivrance du brevet:
**13.03.2019 Bulletin 2019/11**

(21) Numéro de dépôt: **14750568.9**

(22) Date de dépôt: **15.07.2014**

(51) Int Cl.:
**H04W 48/18** (2009.01)

(86) Numéro de dépôt international:
**PCT/FR2014/051822**

(87) Numéro de publication internationale:
**WO 2015/007989 (22.01.2015 Gazette 2015/03)**

(54) **SÉLECTION D'UN RÉSEAU D'ACCÈS CONDITIONNÉE PAR LA TECHNOLOGIE D'ACCÈS CELLULAIRE**

AUSWÄHLEN EINES ZUGANGSNETZES DURCH ZELLTECHNOLOGIE ACCESS ANLAGE

SELECTING AN ACCESS NETWORK CONDITIONED BY CELL TECHNOLOGY ACCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2013 FR 1357002**

(43) Date de publication de la demande:
**25.05.2016 Bulletin 2016/21**

(73) Titulaire: **Orange**
**75015 Paris (FR)**

(72) Inventeurs:
• **DAOUD TRIKI, Khadija**
**F-92190 Meudon (FR)**

• **MOUQUET, Antoine**
**F-92400 Courbevoie (FR)**

(74) Mandataire: **Regimbeau**
**20, rue de Chazelles**
**75847 Paris Cedex 17 (FR)**

(56) Documents cités:
**WO-A1-2012/092935      FR-A1- 2 941 585**

• **TANSIR AHMED ET AL: "Inter-system mobility in evolved packet system (EPS): Connecting non-3GPP accesses", INTELLIGENCE IN NEXT GENERATION NETWORKS (ICIN), 2010 14TH INTERNATIONAL CONFERENCE ON, IEEE, PISCATAWAY, NJ, USA, 11 octobre 2010 (2010-10-11), pages 1-6, XP031805034, ISBN: 978-1-4244-7443-1**

**Description**

DOMAINE TECHNIQUE GENERAL

L'invention concerne le domaine des radiocommunications et concerne plus particulièrement des mécanismes de sélection entre réseaux d'accès cellulaires et réseaux d'accès non cellulaires sans fil (par exemple Wi-Fi) tels que spécifiés par le groupe de normalisation 3GPP dans les spécifications techniques TS 24.302 et TS 24.312.

ETAT DE LA TECHNIQUE

Lorsqu'un utilisateur d'un terminal mobile de communication est abonné auprès d'un opérateur de télécommunication, cet opérateur de télécommunication permet à l'utilisateur de se connecter à un réseau de communication par l'intermédiaire de son terminal mobile, moyennant la souscription d'un abonnement afin d'accéder à plusieurs types de services provenant d'un réseau IP (en anglais, « *Internet Protocol* »), tel que le réseau Internet.

Ce réseau de communication comprend typiquement un réseau d'accès cellulaire comportant un ensemble de points d'accès cellulaires auprès desquels le terminal se connecte. Le réseau d'accès cellulaire peut être de plusieurs types (2G, 3G, 4G), chaque type de réseau étant accessible selon plusieurs technologies d'accès cellulaires (2G : EDGE, GPRS, 3G : UMTS, HSDPA, HSUPA, HSPA, HSPA+, 4G : LTE, LTE-Advanced).

Pour augmenter la couverture et la capacité d'un tel réseau cellulaire, l'opérateur peut mettre à disposition de ses abonnés un réseau d'accès comportant des points d'accès non cellulaires sans fil de type Wi-Fi ou WiMAX (en anglais, « *hot spot* »). Ainsi, un réseau de communication d'un opérateur peut comporter des points d'accès offrant des normes, technologies et débits différents et est donc hétérogène, les terminaux mobiles actuels étant compatibles avec l'ensemble de ces points d'accès. Cette compatibilité permet au terminal mobile d'accéder au réseau de communication de l'opérateur dans des zones où seuls certains types de points d'accès sont disponibles mais aussi de proposer au terminal un point d'accès offrant la meilleure qualité de service en fonction du service accédé et ce même au sein d'une même cellule.

Dans les standards définis par le groupe 3GPP, et notamment dans les spécifications techniques TS 24.302 et TS 24.312, il est prévu un serveur de découverte et de sélection de points d'accès (en anglais, « *Access Network Discovery and Selection Function* » (ANDSF)). Ce serveur ANDSF fournit, sur requête d'un terminal mobile ou bien automatiquement des informations sur les réseaux d'accès non cellulaires sans fil. Ce serveur ANDSF fournit en outre une politique de sélection pouvant comprendre une liste de réseaux d'accès non cellulaires sans fil priorisés par rapport au réseau d'accès cellulaire 3GPP, quel qu'en soit la technologie ou le type. An example can be found in wo 2012/092935.

Ainsi, les politiques fournies par le serveur ANDSF permettent de discriminer des points d'accès non 3GPP entre eux en fonction de leur débit respectifs, mais ne permettent pas de discriminer différentes technologies d'accès cellulaires d'un réseau 3GPP. En effet, la sélection d'un type ou d'une technologie d'accès cellulaire 3GPP s'effectue au niveau du réseau d'accès radio (« *Radio Access Network* » ou « *RAN* », en anglais) et le serveur ANDSF n'est pas censé interférer avec cette sélection.

En particulier, lorsqu'un terminal mobile se trouve sous la couverture d'un réseau cellulaire pouvant proposer différentes technologies d'accès cellulaire, une même politique de sélection sera appliquée par ce terminal mobile, indépendamment des changements de technologie d'accès cellulaire pouvant affecter la cellule du réseau où se trouve ce terminal. Ce problème se pose également lorsque le terminal mobile, en se déplaçant, passe sous la couverture d'un autre réseau cellulaire utilisant une technologie d'accès cellulaire différente.

Ainsi, dans certains cas, il peut être intéressant de prioriser différemment les points d'accès « non 3GPP » par rapport au réseau « 3GPP », en fonction des technologies d'accès « 3GPP » disponibles à un endroit donné, car ces technologies d'accès « 3GPP » offrent des débits considérablement différents. Cependant, ceci n'est pas possible actuellement.

PRESENTATION DE L'INVENTION

La présente invention remédie aux inconvénients susmentionnés et propose, selon un premier aspect, un procédé de sélection d'un réseau d'accès par l'intermédiaire duquel un terminal mobile accède à un réseau de communication, comprenant les étapes suivantes, mises en oeuvre par le terminal mobile :

obtention, en provenance d'un dispositif de sélection de réseaux d'accès, d'au moins une règle de sélection de réseaux d'accès classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire ;
détection d'au moins un réseau d'accès non cellulaire sans fil et d'au moins un réseau d'accès cellulaire auxquels le terminal mobile peut s'attacher ; et

sélection du réseau d'accès le plus prioritaire, parmi les réseaux d'accès détectés, selon ladite au moins une règle de sélection appliquée en fonction de la technologie d'accès cellulaire du réseau d'accès cellulaire détecté.

L'invention permet qu'un terminal dispose d'une ou plusieurs politique(s) de sélection différenciée(s) selon une technologie d'accès cellulaire d'un réseau d'accès cellulaire, afin de pouvoir sélectionner un réseau d'accès en fonction d'une technologie d'accès cellulaire.

Ainsi dans l'invention, les politiques de sélection ne se fondent plus uniquement sur la localisation du terminal dans le réseau comme cela est actuellement le cas et peuvent s'adapter selon la technologie d'accès cellulaire que le terminal peut utiliser dans sa position courante.

En outre, les politiques de sélection classant différemment les points d'accès non cellulaire par rapport au réseau cellulaire 3GPP, en fonction du type de réseau cellulaire ou bien de la technologie cellulaire disponible permettent de discriminer les réseaux d'accès 3GPP dans le processus de sélection entre réseaux d'accès non cellulaire et réseau d'accès cellulaire.

Selon un premier mode de réalisation le terminal mobile obtient une pluralité de règles de sélection comprenant au moins une règle de sélection classant un réseau d'accès cellulaire utilisant la première technologie d'accès cellulaire par rapport à au moins un desdits réseaux d'accès non cellulaire et une règle de sélection classant un réseau d'accès cellulaire utilisant la deuxième technologie d'accès cellulaire par rapport à au moins un desdits réseaux d'accès non cellulaire, le procédé comprenant en outre la sélection, parmi lesdites règles de sélection, d'une règle de sélection à appliquer lors de la sélection du réseau d'accès en fonction de la technologie d'accès cellulaire du réseau d'accès cellulaire détecté.

Ce premier mode de réalisation est avantageux en ce qu'il permet une différenciation des règles de sélection, en fonction de la technologie d'accès cellulaire détectée, qui se base sur certains des mécanismes déjà existants dans les standards et donc peut s'appliquer aux réseaux fonctionnant selon de tels standards moyennant un minimum de modifications.

Dans ce premier mode de réalisation, il peut être avantageux que chacune des règles de sélection comprend un indicateur de validité désignant la technologie d'accès cellulaire utilisée par le réseau d'accès cellulaire classé dans ladite règle de sélection, la sélection du réseau d'accès se faisant en appliquant la règle de sélection dont l'indicateur de validité correspond à la technologie d'accès utilisée par le réseau d'accès cellulaire détecté.

L'utilisation d'un tel indicateur de validité permet de garantir que, parmi l'ensemble de règles de sélection, une seule règle de sélection s'applique à une technologie d'accès cellulaire donnée, en l'occurrence celle qui est déterminée par le terminal mobile pour le réseau cellulaire détecté, et d'éviter ainsi des conflits entre politiques de sélection.

Alternativement, chacune desdites règles de sélection peut comprendre un indicateur de validité désignant un intervalle de débit pour lequel ladite règle est applicable, et le procédé comprend alors en outre la détermination par le terminal mobile d'un débit de transmission disponible au moyen de la technologie d'accès cellulaire utilisée par le réseau d'accès cellulaire détecté, la sélection du réseau d'accès se faisant en appliquant la règle de sélection dont l'intervalle de débit comprend le débit de transmission déterminé.

Il est ainsi possible au terminal mobile de différencier les règles de sélection à appliquer en fonction du débit de transmission disponible sur le réseau cellulaire détecté, donc indirectement en fonction de la technologie d'accès cellulaire de ce réseau, mais sans avoir à déterminer directement la technologie d'accès cellulaire utilisé par ce réseau cellulaire, ce qui n'est pas forcément possible ou peut conduire à des erreurs lorsque l'information de technologie d'accès cellulaire diffusée sur un réseau cellulaire n'est pas correcte. Ceci permet également de prendre en compte le débit de transmission réellement offert par la technologie d'accès du réseau cellulaire détecté.

Alternativement, dans ce premier mode de réalisation, lesdites règles de sélection sont classées selon un ordre de priorité déterminé par le dispositif de sélection, la règle de sélection la plus prioritaire étant utilisée par le terminal mobile lorsqu'il sélectionne un réseau d'accès parmi une pluralité de réseaux d'accès cellulaires détectés.

Selon un deuxième mode de réalisation, ladite au moins une règle de sélection consiste en une règle unique de sélection classant, par ordre de priorité, l'ensemble desdits réseaux d'accès. Ce deuxième mode de réalisation, bien que plus éloigné des mécanismes déjà existants dans les standards, est avantageux en termes de simplicité de mise en oeuvre, aussi bien côté dispositif de sélection que côté terminal mobile.

D'autres caractéristiques du procédé selon le premier aspect de l'invention sont les suivantes, prises seules ou en combinaison.

L'ordre de priorité des réseaux d'accès classés dans ladite au moins une règle de sélection est fonction des débits respectivement associés aux technologies d'accès utilisées par lesdits réseaux d'accès. Ceci permet notamment d'affecter à un utilisateur le réseau d'accès lui offrant le meilleur débit, entre tous les réseaux d'accès auxquels il peut avoir accès dans sa position courante.

L'ordre de priorité des réseaux d'accès classés dans ladite au moins une règle de sélection est fonction d'informations de congestion transmises au dispositif de sélection de réseaux d'accès par des points d'accès desdits réseaux d'accès. Ceci permet de mettre à jour dynamiquement un ensemble de règles de sélection, afin de modifier en temps réel ou quasi-réel l'ordre de priorité des réseaux d'accès en fonction de la disponibilité ou d'une congestion éventuelle des différents réseaux d'accès.

L'étape de sélection est mise en oeuvre après la détermination d'un changement de technologie d'accès cellulaire utilisée par un des réseaux cellulaires détectés. Il est ainsi possible de choisir un autre réseau d'accès en cas de dégradation, ou au contraire d'amélioration, de la couverture réseau cellulaire à l'endroit où se trouve le terminal mobile. Ceci est particulièrement avantageux lorsque le terminal mobile se déplace au sein d'une même cellule, et que la technologie d'accès cellulaire varie du fait de ce déplacement, ce qui fait qu'il peut être approprié de changer de réseau d'accès pour conserver ou obtenir la meilleure qualité de connexion possible.

Les technologies d'accès cellulaires peuvent appartenir au groupe suivant : 2G, 3G, 4G. Alternativement, les technologies d'accès cellulaires peuvent appartenir au groupe suivant : IS95A, IS95B, EDGE, GPRS, HSDPA, HSPA, HSPA+, HSUPA, LTE, UMTS.

Selon un second aspect, l'invention propose un procédé d'assistance à la sélection, par un terminal mobile, d'un réseau d'accès auquel s'attacher pour accéder à un réseau de communication, comprenant les étapes suivantes :

génération d'au moins une règle de sélection de réseau d'accès classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire utilisant une technologie d'accès non cellulaire sans fil; et

envoi de ladite au moins une règle de sélection au terminal mobile, ladite au moins une règle de sélection étant destinée à être utilisée par ledit terminal mobile lors de la sélection d'un réseau d'accès auquel s'attacher.

Selon un troisième aspect, l'invention propose un terminal mobile apte à recevoir, en provenance d'un dispositif de sélection de réseaux d'accès, au moins une règle de sélection de réseau d'accès classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire utilisant une technologie d'accès non cellulaire sans fil, caractérisé en ce qu'il comprend un module de traitement configuré pour sélectionner, parmi au moins un réseau d'accès non cellulaire sans fil et au moins un réseau d'accès cellulaire détectés par ledit terminal, le réseau d'accès le plus prioritaire selon ladite au moins une règle de sélection appliquée en fonction de la technologie d'accès cellulaire du réseau d'accès sans fil détecté.

Selon un quatrième aspect, l'invention propose un dispositif de sélection de réseaux d'accès, agencé pour envoyer au moins une règle de sélection à un terminal mobile, ladite au moins une règle de sélection étant destinée à assister le terminal mobile dans sa sélection d'un réseau d'accès auquel s'attacher pour accéder à un réseau de communication, caractérisé ce qu'il comprend un module de traitement configuré pour générer ladite au moins une règle de sélection de réseau d'accès en classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire utilisant une technologie d'accès non cellulaire sans fil.

Selon un cinquième aspect, l'invention propose un programme d'ordinateur comprenant des instructions de code pour l'exécution des étapes d'un procédé selon le premier aspect de l'invention, lorsque ledit programme d'ordinateur est exécuté par un processeur.

Selon un sixième aspect, l'invention propose un support d'enregistrement, lisible par un dispositif, dans lequel est enregistré le programme d'ordinateur selon le cinquième aspect de l'invention.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 illustre schématiquement un système de communication conforme à la présente invention ;
- la figure 2 illustre une situation où le terminal mobile UE peut mettre en oeuvre un procédé de sélection de réseaux d'accès selon un mode de réalisation de la présente invention ; et
- la figure 3 illustre un procédé de sélection de réseaux d'accès selon un mode de réalisation de l'invention.

## DESCRIPTION DETAILLEE DE L'INVENTION

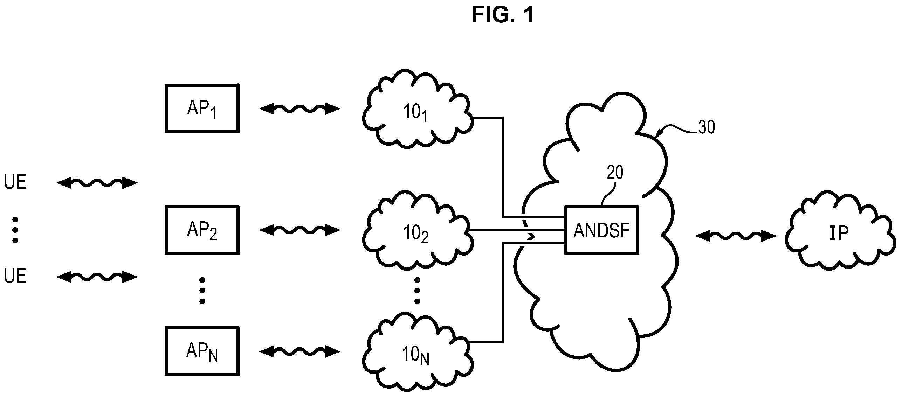

En relation avec la **figure 1**, un système de communication conforme à l'invention est illustré.

Ce système comprend plusieurs points d'accès $AP_i$ permettant d'accéder à des réseaux d'accès 10i de type réseaux d'accès mobiles cellulaires (e.g. réseaux 2G, 3G ou 4G) ou de type réseaux d'accès non cellulaire sans fil (e.g. réseau WLAN, par exemple WiFi ou WiMAX), ainsi qu'au moins un terminal mobile UE. Chaque réseau d'accès 10i est illustré comme ne comprenant qu'un seul point d'accès $AP_i$ sur la figure 1, de manière purement illustrative et non limitative.

Ainsi, en s'attachant à l'un des réseaux d'accès 10i, lorsqu'il est sous la couverture radio d'un point d'accès $AP_i$ de ce réseau 10i et qu'il s'attache à ce point d'accès, le terminal mobile UE peut se connecter à un réseau de communication 30 lui permettant d'accéder par exemple à un réseau IP (en anglais, « *Internet Protocol* ») du type Internet, pour accéder à différents services.

On entend ici par « s'attacher à un point d'accès » le fait que le terminal mobile UE soit localisé dans la zone de couverture de ce point d'accès, soit autorisé à accéder au réseau d'accès de ce point d'accès et ait sélectionné ce point d'accès pour accéder à ce réseau d'accès. Le terminal mobile UE peut alors soit être connecté à ce point d'accès (c'est-à-dire avoir un canal radio établi avec ce point d'accès), soit être en veille (sans communication radio active). Le terminal mobile UE est considéré comme étant « attaché à un réseau d'accès » lorsqu'il est attaché à un point d'accès de ce réseau d'accès.

Les différents points d'accès $AP_1$,..., $AP_N$ sont soit des points d'accès d'un réseau d'accès cellulaire, auquel cas ils peuvent être typiquement désignés par « points d'accès 3GPP » lorsque le réseau d'accès en question est un réseau 3GPP, soit des points d'accès à un réseau non cellulaire sans fil, auquel cas ils peuvent être typiquement désignés par « points d'accès non 3GPP » lorsque le réseau d'accès en question n'est pas un réseau 3GPP. En ce qui concerne les réseaux d'accès mobiles cellulaires, les points d'accès d'un réseau d'accès 4G sont des équipements appelés « eNodeB », les points d'accès d'un réseau d'accès 3G sont des équipements appelés « NodeB » et les points d'accès d'un réseau d'accès 2G ou GPRS sont des stations de base « BTS » (pour « *Base Transceiver Station* » en anglais). En ce qui concerne les réseaux d'accès non cellulaires sans fil, les points d'accès d'un réseau WiFi peuvent être des « *hotspots* » et les points d'accès d'un réseau WiMAX, sont des stations WiMAX.

Le réseau de communication 30 comprend également un dispositif 20 de sélection de réseaux d'accès, typiquement situé dans le coeur de ce réseau de communication 30, qui permet, d'une part, d'aider un terminal mobile UE à découvrir les points d'accès des réseaux d'accès non cellulaires sans fil auquel il peut s'attacher et, d'autre part, d'aider ce terminal mobile UE à choisir entre un attachement à un point d'accès non cellulaire sans fil et un attachement à un réseau d'accès cellulaire, en fonction d'une politique de sélection transmise par ce dispositif de sélection. Un tel dispositif de sélection de réseaux d'accès est typiquement un dispositif mettant en oeuvre la fonction ANDSF telle que définie dans les standards 3GPP, i.e. un serveur ANDSF selon les documents TS 23.402 et 23.412. L'invention ne se limite pas à cette seule entité et peut s'appliquer à tout réseau présentant des entités physiques ou logiques ayant les mêmes fonctionnalités que cette entité ANDSF.

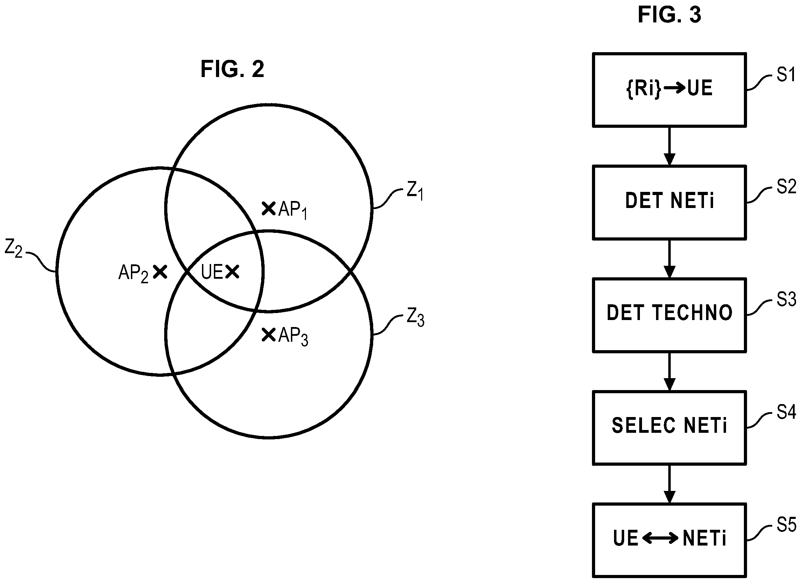

On se réfère maintenant à la **figure 2**, qui illustre une situation où le terminal mobile UE peut mettre en oeuvre un procédé de sélection selon un mode de réalisation de la présente invention.

Dans cette situation, le réseau de communication 30 est accessible via trois réseaux d'accès distincts $10_1$ à $10_3$ représentés respectivement par les points d'accès $AP_1$ à $AP_3$. Chaque point d'accès $AP_i$ (i=1, 2, 3) définit une zone de couverture radio $Z_i$ (i=1, 2, 3) dans laquelle le terminal mobile UE peut se connecter à ce point d'accès, et ainsi s'attacher au réseau d'accès $10_i$ correspondant. Ces zones $Z_i$ pouvant se recouvrir comme illustré, lorsque le terminal mobile UE se trouve dans une telle zone de recouvrement, il est amené à choisir le point d'accès réseau (non cellulaire sans fil ou cellulaire) auquel s'attacher, et donc le réseau d'accès lui permettant d'accéder au réseau de communication 30, selon un processus de sélection décrit par la suite.

Dans ce qui suit, on entend par technologie d'accès cellulaire :

- Soit la technologie d'accès correspondant à la génération de réseau cellulaire en question, si on se place à un premier niveau, plus large, de sélection. On distingue alors les technologies d'accès suivantes :

  ◦ un réseau cellulaire 2G,
  ◦ un réseau cellulaire 3G,
  ◦ un réseau cellulaire 4G ou
  ◦ un réseau CDMA.

- Soit la technologies d'accès correspondant à un sous-catégorie de technologie de transmission utilisée dans les réseaux cellulaires susmentionnés, si on se place à un second niveau, plus fin, de sélection. On distingue alors les technologies d'accès suivantes :

  ◦ Pour le CDMA, les technologies IS95A, IS95B ;
  ◦ Pour un réseau 2G, les technologies GPRS, EDGE ;
  ◦ Pour un réseau 3G, les technologies UMTS, HSDPA, HSUPA, HSPA, HSPA+ ; et
  ◦ Pour un réseau 4G, les technologies LTE, LTE-Advanced.

Enfin, on entend par réseau d'accès non cellulaire sans fil un réseau Wi-Fi ou WiMAX.

Le processus de sélection d'un réseau d'accès peut typiquement être déclenché alors que le terminal mobile UE est déjà attaché à un point d'accès AP$_1$ d'un premier réseau d'accès 10$_1$ (le terminal mobile UE pouvant alors être en train ou sur le point d'accéder à un certain type de service), et qu'un autre réseau d'accès est également détecté par le terminal mobile UE, offrant ainsi une alternative de connexion à ce terminal.

Dans un tel cas, le terminal mobile UE peut vouloir sélectionner un nouveau réseau d'accès en appliquant le processus de sélection ci-après, par exemple pour bénéficier d'un débit supérieur au débit accessible via le point d'accès AP$_1$ ou, lorsqu'une dégradation de la connexion déjà établie avec le point d'accès AP$_1$ est détectée, pour pouvoir éventuellement s'attacher à un point d'accès AP$_2$ de l'autre réseau d'accès détecté, afin de maintenir une bonne qualité de connexion.

Alternativement, le processus de sélection d'un réseau d'accès peut être déclenché alors que le terminal mobile UE n'est pas encore attaché à un réseau d'accès, mais qu'il détecte qu'au moins deux réseaux d'accès distincts sont à sa portée, ce qui peut être le cas lors de la mise sous tension du terminal mobile par son utilisateur. Dans un tel cas, le terminal mobile UE peut appliquer le processus de sélection ci-après afin de sélectionner directement le réseau d'accès auquel s'attacher.

On se réfère maintenant à la **figure 3** qui illustre un procédé de sélection d'un point d'accès d'un réseau de communication selon un mode de réalisation de la présente invention.

Dans une première étape préalable S1, le terminal mobile UE obtient auprès du dispositif de sélection de réseaux d'accès 20 une ou plusieurs règles {Ri} de sélection (alternativement appelées « politiques de sélection ») qui vont lui permettre de procéder ensuite à la sélection d'un réseau d'accès, lorsqu'il aura la possibilité de le faire.

Cet ensemble de règles de sélection, comprenant une ou plusieurs règle(s) de sélection, classe, selon un ordre de priorité défini par le dispositif de sélection 20, un ou plusieurs réseaux d'accès cellulaires utilisant des technologies cellulaires distinctes, ainsi qu'un ou plusieurs réseaux d'accès non cellulaires sans fil. En d'autres termes, cet ensemble de règles de sélection propose un classement priorisé portant, côté réseaux cellulaires, sur au moins deux technologies d'accès différentes et, côté réseaux non cellulaires sans fil, sur un ou plusieurs réseaux non cellulaires sans fils.

L'ordre de priorité utilisé par le dispositif de sélection 20 pour classer les réseaux d'accès dans l'ensemble de règles de sélection peut être fonction des débits respectivement associés aux technologies d'accès utilisées par ces réseaux d'accès. Le dispositif de sélection 20 peut utiliser des valeurs de débit fixées dans les normes 3GPP, ce qui génère un ensemble de règles de sélection relativement statique. Selon une autre alternative plus dynamique, les débits des différentes technologies d'accès utilisables sont mesurés et le dispositif de sélection 20 utilise ces mesures pour prioriser les réseaux d'accès dans l'ensemble de règles de sélection.

Complémentairement à cette politique de priorisation des réseaux d'accès selon les débits associés aux différentes technologies d'accès, le dispositif de sélection 20 peut définir l'ordre de priorité en fonction d'informations de congestion pouvant être remontées par différents points d'accès des réseaux d'accès, et ainsi mettre à jour dynamiquement cet ensemble de règles de sélection afin de modifier en temps réel ou quasi-réel l'ordre de priorité des réseaux d'accès en fonction de la disponibilité ou d'une congestion éventuelle des différents réseaux d'accès. Dans ce cas, les différentes règles de sélection sont transmises au terminal mobile UE après une telle mise à jour, afin que ce terminal UE dispose de règles de sélection correspondant à l'état des réseaux d'accès.

Cet ensemble de règles de sélection peut prendre la forme d'un fichier, par exemple sous format xml, généré par le dispositif de sélection 20 avant d'être transmis au terminal mobile UE et utilisant une syntaxe similaire à la syntaxe définie dans la spécification 3GPP TS 24.312.

A l'issue de cette étape préalable, le terminal mobile UE dispose d'une ou plusieurs politique(s) de sélection différenciée(s) selon une technologie d'accès cellulaire d'un réseau d'accès cellulaire, ces politiques ne se fondant plus uniquement sur la localisation du terminal UE dans le réseau, comme cela peut être fait actuellement avec l'ANDSF. Avec un tel ensemble de règle(s) de sélection, le terminal mobile UE est ainsi capable de prioriser différemment les réseaux cellulaires par rapport aux réseaux non cellulaires sans fil, en fonction de la technologie d'accès cellulaire utilisée par le(s) réseau(x) cellulaire(s) et à laquelle il peut accéder dans sa position courante.

Le terminal mobile UE surveille ensuite les réseaux d'accès auquel il peut s'attacher dans sa position courante, i.e. les réseaux d'accès sous la couverture desquels il se trouve, afin de détecter s'il a un choix de réseau d'accès à sa disposition. La détection des réseaux d'accès auquel le terminal peut s'attacher est mise en oeuvre par le terminal lui-même selon des techniques connues qui ne seront pas décrites ici.

Lorsque le terminal mobile UE détecte (étape S2) à la fois un (ou plusieurs) réseau d'accès non cellulaire sans fil et un (ou plusieurs) réseau d'accès cellulaire auxquels il peut s'attacher (i.e. dans la couverture desquels il se trouve dans sa position courante), il détermine (étape S3), pour chaque réseau d'accès cellulaire détecté, la technologie d'accès cellulaire qu'il peut utiliser pour s'attacher à un point d'accès de ce réseau cellulaire.

Cette étape S3 de détermination peut en particulier être mise en oeuvre après la détection d'un nouveau réseau d'accès cellulaire auquel le terminal mobile UE n'est pas déjà attaché ou après la détection d'un réseau d'accès cellulaire avec lequel le terminal mobile n'a pas de connexion active établie (e.g. le terminal mobile étant en veille). En ce qui concerne un réseau d'accès cellulaire détecté avec lequel le terminal mobile a déjà une connexion active, cette étape S3 de détermination peut être facultative.

Pour effectuer cette détermination, le terminal mobile UE peut se baser sur l'information de technologie d'accès cellulaire insérée dans le champ SIB de messages de signalisation diffusés par ce réseau. Comme ce type d'information peut cependant ne pas être complètement fiable, une alternative avantageuse consiste à ce que le terminal mobile UE détermine cette technologie d'accès cellulaire en déclenchant l'établissement d'une connexion avec le réseau cellulaire détecté, par exemple au moyen d'une connexion RRC. Le réseau cellulaire détecté retourne alors au terminal mobile UE un message d'informations contenant un indicateur de la technologie d'accès cellulaire utilisable pour se connecter auprès de lui. Le terminal mobile UE peut alors mémoriser cette indication dans une mémoire cache, pour s'en servir dans la suite du processus de sélection, sans nécessairement poursuivre le processus de connexion au réseau cellulaire détecté.

Le terminal mobile UE peut aussi effectuer cette détermination de manière autonome. Par exemple, lorsque le terminal mobile UE se trouve initialement à proximité du centre d'une cellule 3G avec laquelle il est attaché, ce qu'il peut déterminer au moyen d'une mesure de la puissance du signal radio reçu dépassant un certain seuil, il peut déterminer qu'il peut utiliser la technologie d'accès HSPA+ dans cette cellule. A contrario, il peut déterminer se trouver au bord de cette cellule lorsqu'il mesure une puissance de signal radio reçu en dessous d'un certain seuil. Dans ce cas, il peut déterminer qu'il ne peut utiliser que la technologie d'accès UMTS dans cette cellule.

Une fois déterminée(s) la ou les technologies des réseaux d'accès cellulaire(s) détecté(s), le terminal mobile UE sélectionne (étape S4), parmi les différents réseaux d'accès détecté, le réseau d'accès auquel s'attacher, au moyen de l'ensemble de règles de sélection reçu, en choisissant parmi les réseaux détectés le réseau le plus prioritaire selon cet ensemble de règles, en tenant compte de la technologie d'accès cellulaire du ou des réseau(x) cellulaire(s) détecté(s). En d'autres termes, cet ensemble de règles de sélection permet d'appliquer un ordre de sélection différent en fonction de cette technologie d'accès cellulaire.

Cette étape S4 sélection peut être mise en oeuvre dès lors que l'étape S2 de détection de réseaux d'accès révèle un nouveau réseau d'accès disponible, qu'il soit cellulaire ou non cellulaire sans fil, pour l'attachement du terminal mobile UE.

Cette étape S4 de sélection peut également être mise en oeuvre dès que le terminal mobile UE détermine un changement de technologie d'accès cellulaire pour un réseau d'accès cellulaire détecté. Ainsi, lorsque le terminal mobile UE est connecté à un point d'accès 3G au moyen de la technologie d'accès HSPA+ et qu'il détecte un remplacement de cette technologie par la technologie d'accès UMTS (e.g. lors d'une dégradation de la connexion existante ou d'un déplacement du terminal vers le bord de la cellule), ou inversement lorsque le terminal mobile UE est connecté à un point d'accès 3G au moyen de la technologie d'accès UMTS et qu'il détecte un remplacement de cette technologie d'accès par la technologie HSPA+ (e.g. lors d'une amélioration de la connexion existante ou d'un déplacement du terminal vers le centre de la cellule), il peut déclencher la procédure de sélection, afin de sélectionner éventuellement un autre réseau d'accès.

Lorsque le réseau d'accès sélectionné se trouve être le réseau d'accès auquel le terminal mobile UE est déjà attaché, alors cet attachement est simplement conservé, sans modification. Par contre, si le réseau d'accès sélectionné est un nouveau réseau d'accès, différent du réseau d'accès auquel le terminal mobile UE est déjà attaché, le terminal mobile UE s'attache alors (étape S5) à ce nouveau réseau d'accès, en sélectionnant un point d'accès de ce réseau sélectionné auquel il peut s'attacher. Il peut aussi interrompre son attachement avec l'ancien réseau d'accès. L'application de cette règle de sélection selon la méthode définie dans la spécification 3GPP TS 24.312 conduit le terminal mobile UE à choisir, dans son environnement, un point d'accès du réseau d'accès sélectionné en termes de qualité de service.

Dans un premier mode de réalisation, l'ensemble de règles de sélection récupéré par le terminal mobile UE auprès du dispositif de sélection 20 consiste en une seule règle de sélection. Cette règle de sélection classe alors, les uns par rapport aux autres :

- Au moins un réseau d'accès cellulaire utilisant une première technologie d'accès cellulaire et un réseau d'accès cellulaire (pouvant être le même que le précédent) utilisant une deuxième technologie d'accès cellulaire, différente de la première technologie, et
- un ou plusieurs réseaux d'accès non cellulaires sans fil (typiquement plusieurs réseaux wifi offrant différents niveaux de sécurité et/ou de débit).

A titre d'exemple, cette règle globale peut classer des réseaux d'accès selon l'ordre de priorité suivant, décroissant en fonction du débit offert les technologies d'accès utilisées par ces réseaux d'accès:

**4G>Wifi1>3G+>Wifi2>3G>Wifi3>2G,**

où :

- "4G" désigne tout réseau d'accès cellulaire de dernière génération offrant au terminal mobile UE la possibilité d'utiliser une technologie d'accès 4G (e.g. LTE, LTE-advanced)
- « 3G+ » désigne tout réseau d'accès cellulaire de troisième génération offrant au terminal mobile UE la possibilité d'utiliser une technologie d'accès 3G avancée par rapport à la technologie d'accès 3G de base (e.g. HSPA ou HSDPA)
- « 3G » désigne tout réseau d'accès cellulaire de troisième génération offrant au terminal mobile UE la possibilité d'utiliser une technologie d'accès 3G de base (e.g. UMTS, Rel-99)
- « 2G » désigne tout réseau d'accès cellulaire de deuxième génération offrant au terminal mobile UE la possibilité d'utiliser une technologie d'accès 2G (e.g. GPRS, EDGE).
- « Wifi1 » désigne un premier réseau d'accès non cellulaire sans fil de type wifi offrant un débit de transmission (en voie descendante et/ou montante) inférieur au débit obtenu avec une technologie d'accès 4G, mais supérieur au débit obtenu avec les technologies d'accès 3G avancées.
- « Wifi2 » désigne un deuxième réseau d'accès non cellulaire sans fil de type wifi offrant un débit de transmission (en voie descendante et/ou montante) inférieur au débit obtenu avec des technologies d'accès 3G avancées, mais supérieur au débit obtenu avec des technologies d'accès 3G de base.
- « Wifi3 » désigne un troisième réseau d'accès non cellulaire sans fil de type wifi offrant un débit de transmission (en voie descendante et/ou montante) inférieur au débit obtenu avec des technologies d'accès 3G de base, mais supérieur au débit obtenu avec des technologies d'accès 2G.

Ce premier mode de réalisation est notamment avantageusement applicable lorsque le terminal mobile UE dispose de la faculté de sélectionner entre plusieurs technologies d'accès cellulaires, et donc que la technologie d'accès cellulaire ne lui est pas imposée par les réseaux d'accès radio (RAN). Dans ce cas, le dispositif de sélection 20 peut être localisé dans une entité du ou des réseaux d'accès auxquels peut s'attacher ce terminal. Ce premier mode de réalisation s'applique cependant également au cas de figure habituel où une unique technologie d'accès cellulaire est imposée par les réseaux d'accès radio (RAN) au terminal UE. Dans ce cas, à chaque changement détecté de technologie d'accès cellulaire, le terminal mobile UE peut réappliquer la règle de sélection afin d'éventuellement sélectionner un nouveau réseau d'accès qui deviendrait prioritaire du fait du changement de technologie d'accès cellulaire.

Dans un autre mode de réalisation, l'ensemble de règles de sélection envoyé par le dispositif de sélection 20 comprend plusieurs règles de sélection, chacune applicable en fonction de la technologie d'accès cellulaire avec laquelle le terminal mobile UE peut s'attacher à un réseau cellulaire qu'il détecte. Chacune de ces règles classe un seul ensemble de réseau(x) d'accès cellulaire(s), utilisant une ou plusieurs technologie(s) d'accès cellulaire(s), par rapport à un ou plusieurs réseau(x) d'accès non cellulaire(s) sans fil, selon un ordre de priorité défini par le dispositif de sélection 20.

Dans cet autre mode de réalisation, il est avantageux qu'aucune technologie d'accès cellulaire ne soit concernée par deux règles de sélection distinctes, afin de garantir que, parmi l'ensemble de règles de sélection, une seule règle de sélection s'applique à une technologie d'accès cellulaire donnée.

Pour implémenter une telle condition, un (voire plusieurs) indicateur de validité peut être inséré dans chaque règle de sélection, chaque indicateur de validité désignant une technologie d'accès cellulaire distincte pour laquelle s'applique la règle de sélection, lorsqu'elle contient cet indicateur. Un tel indicateur de validité peut s'insérer dans un champ existant d'une règle de sélection transmise par une entité ANDSF, ce champ conditionnant l'application de la règle selon un critère de localisation, typiquement dans le champ « ValidityArea » tel que défini dans le document normatif TS 24.312.

Ces indicateurs de validité peuvent ainsi prendre les formes suivantes, lorsque l'on considère les différentes technologies d'accès cellulaires connues à ce stade:

« NETWORK_TYPE_2G » : indique que la règle de sélection contenant cet indicateur est valable dès lors que le terminal mobile UE peut s'attacher à un point d'accès d'un réseau d'accès cellulaire 2G, en utilisant n'importe quelle technologie d'accès 2G ;

« NETWORK_TYPE_3G » : indique que la règle de sélection contenant cet indicateur est valable dès lors que le terminal mobile UE peut s'attacher à un point d'accès d'un réseau d'accès cellulaire 3G, en utilisant n'importe quelle technologie d'accès 3G ;

« NETWORK_TYPE_4G » : indique que la règle de sélection contenant cet indicateur est valable dès lors que le terminal mobile UE peut s'attacher à un point d'accès d'un réseau d'accès cellulaire 4G, en utilisant n'importe quelle technologie d'accès 4G.

« NETWORK_TYPE_GPRS » : indique que la règle de sélection contenant cet indicateur est valable dès lors que le terminal mobile UE peut s'attacher à un point d'accès d'un réseau d'accès cellulaire 2G en utilisant la technologie d'accès GPRS ;

« NETWORK_TYPE_EDGE » : indique que la règle de sélection contenant cet indicateur est valable dès lors que le terminal mobile UE peut s'attacher à un point d'accès d'un réseau d'accès cellulaire 2G en utilisant la technologie d'accès EDGE ;

« NETWORK_TYPE_UMTS » : indique que la règle de sélection contenant cet indicateur est valable dès lors que le terminal mobile UE peut s'attacher à un point d'accès d'un réseau d'accès cellulaire 3G en utilisant la technologie d'accès UMTS ;

« NETWORK_TYPE_HSDPA » : indique que la règle de sélection contenant cet indicateur est valable dès lors que le terminal mobile UE peut s'attacher à un point d'accès d'un réseau d'accès cellulaire 3G en utilisant la technologie d'accès HSDPA ;

« NETWORK_TYPE_HSUPA » : indique que la règle de sélection contenant cet indicateur est valable dès lors que le terminal mobile UE peut s'attacher à un point d'accès d'un réseau d'accès cellulaire 3G en utilisant la technologie d'accès HSUPA ;

« NETWORK_TYPE_HSPA » : indique que la règle de sélection contenant cet indicateur est valable dès lors que le terminal mobile UE peut s'attacher à un point d'accès d'un réseau d'accès cellulaire 3G en utilisant la technologie d'accès HSPA ;

« NETWORK_TYPE_HSPAP » : indique que la règle de sélection contenant cet indicateur est valable dès lors que le terminal mobile UE peut s'attacher à un point d'accès d'un réseau d'accès cellulaire 3G en utilisant la technologie d'accès HSPA+ ;

« NETWORK_TYPE_LTE » : indique que la règle de sélection contenant cet indicateur est valable dès lors que le terminal mobile UE peut s'attacher à un point d'accès d'un réseau d'accès cellulaire 4G en utilisant la technologie d'accès LTE.

A titre d'exemple, l'ensemble de règles de sélection suivant peut être utilisé :

- Règle de sélection 1 : Lorsque le terminal mobile UE peut s'attacher à un point d'accès 4G ou à un point d'accès 3G en utilisant la technologie d'accès cellulaire HSPA+, les réseaux d'accès de type Wi-Fi privé ont le niveau de priorité 1 (parce qu'ils sont supposés offrir un meilleur débit que les réseaux d'accès 3GPP), les réseaux d'accès cellulaires ont le niveau de priorité 2 (pour des technologies d'accès cellulaire 4G ou HSPA+ choisies au niveau du RAN), et les autres réseaux d'accès Wi-Fi ont le niveau de priorité 3 (parce qu'ils sont supposés offrir des débits inférieurs au réseau d'accès cellulaires. L'applicabilité de cette règle de priorité 1 peut être conditionnée en y insérant les indicateurs « NETWORK_TYPE_HSPAP » et « NETWORK_TYPE_4G » susmentionnés.
- Règle de sélection 2 : Lorsque le terminal mobile UE peut s'attacher à un point d'accès 3G en utilisant les technologies d'accès cellulaires HSPA ou HSDPA, les réseaux d'accès de type Wi-Fi privé ou Wi-Fi d'opérateur ont le niveau de priorité 1 (parce qu'ils sont supposés offrir un meilleur débit que la technologie HSPA), les réseaux d'accès cellulaires ont le niveau de priorité 2 (pour des technologies d'accès cellulaires HSPA ou HSPDA choisies au niveau du RAN), et les réseaux d'accès Wi-Fi communautaire ont le niveau de priorité 3 (parce qu'ils sont supposés offrir des débits inférieurs à la technologie HSDPA). L'applicabilité de cette règle de priorité 2 peut être conditionnée en y insérant les indicateurs « NETWORK_TYPE_HSPA » et « NETWORK_TYPE_HSDPA » susmentionnés.
- Règle de sélection 3 : Lorsque le terminal mobile UE peut s'attacher à un point d'accès 2G ou à un point d'accès 2G en utilisant la technologie d'accès cellulaire UMTS, tous les réseaux d'accès Wi-Fi ont le niveau de priorité 1 (parce qu'ils sont supposés offrir un meilleur débit que la technologie UMTS) et les réseaux d'accès 3GPP ont le niveau de priorité 2 (pour les technologies d'accès cellulaires 2G et UMTS choisies au niveau du RAN). L'applicabilité de cette règle de priorité 3 peut être conditionnée en y insérant les indicateurs « NETWORK_TYPE_UMTS » et « NETWORK_TYPE_2G » susmentionnés.

Ainsi, lors d'une troisième étape S4 de sélection, le terminal mobile UE détermine, pour chacune des règles de sélection reçue, si elle est applicable au regard de la technologie d'accès cellulaire déterminée à l'étape S3, une règle de sélection étant considérée comme étant applicable si elle concerne la technologie d'accès cellulaire utilisée par un réseau cellulaire détecté, ce qui est déterminé en vérifiant si l'indicateur de validité désignant une telle technologie d'accès cellulaire est inséré dans cette règle.

A ce stade, dans la mesure où une seule technologie d'accès cellulaire est déterminée et que chaque technologie d'accès cellulaire ne peut être concernée que par une seule règle de sélection, une seule règle de sélection est déterminée comme étant applicable parmi les différentes règles reçues et c'est cette règle de sélection qui est utilisée par le terminal mobile UE pour décider du réseau d'accès auquel s'attacher.

Ainsi, en reprenant l'exemple précédent, lorsque le terminal mobile UE se trouve sous la couverture d'un seul réseau cellulaire 3G et que celui-ci propose la meilleure technologie d'accès cellulaire 3G possible (i.e. HSPA+), c'est la règle de sélection 1 qui s'applique automatiquement, du simple fait que la technologie d'accès HSPA+ est proposée prioritairement au terminal mobile UE par le réseau d'accès 3G.

Lorsqu'il n'est plus possible d'utiliser la technologie HSPA+ (par exemple lorsque le terminal mobile UE rentre dans un bâtiment tout en restant sous la couverture du réseau 3G) et que le réseau 3G propose au terminal UE d'utiliser la technologie d'accès cellulaire HSPA à la place, la règle de sélection 2 devient la règle à appliquer par le terminal mobile UE, ce qui peut entraîner l'attachement du terminal UE à un réseau Wifi d'opérateur (si le terminal UE détecte qu'il est sous la couverture d'un tel réseau) qui n'était pas privilégié avec la règle de sélection 1 précédemment appliquée.

L'ensemble de règles de sélection transmis par le dispositif de sélection 20 peut être écrit sous la forme d'un fichier xml comme suit :

```
<Policy>
        <RulePriority>1</RulePriority>
        <PrioritizedAccess>
                <AccessTechnology>3</AccessTechnology>
                <AccessId>operator1</AccessId>
                <AccessNetworkPriority>1</AccessNetworkPriority>
        </PrioritizedAccess>
        <PrioritizedAccess>
                <AccessTechnology>3</AccessTechnology>
                <AccessId> operator2</AccessId>
                <AccessNetworkPriority>2</AccessNetworkPriority>
        </PrioritizedAccess>
        <PrioritizedAccess>
                <AccessTechnology>1</AccessTechnology>
                <AccessNetworkPriority>3</AccessNetworkPriority>
        </PrioritizedAccess>
        <ValidityArea>
                <N3GPP_Location>
                        <PLMN>XXX</PLMN>
                        <LAC>01</LAC>
                        <GERAN_CI >01</GERAN_CI>
                </N3GPP_Location>
```

```
        </ValidityArea>
<PLMN>XXX</PLMN>
</Policy>
<Policy>
        <RulePriority>1</RulePriority>
        <PrioritizedAccess>
                <AccessTechnology>3</AccessTechnology>
                <AccessId> operator1</AccessId>
                <AccessNetworkPriority>1</AccessNetworkPriority>
        </PrioritizedAccess>
        <PrioritizedAccess>
                <AccessTechnology>1</AccessTechnology>
                <AccessNetworkPriority>2</AccessNetworkPriority>
        </PrioritizedAccess>
        <PrioritizedAccess>
                <AccessTechnology>3</AccessTechnology>
                <AccessId> operator1</AccessId>
                <AccessNetworkPriority>3</AccessNetworkPriority>
        </PrioritizedAccess>
        <ValidityArea>
                        <N3GPP_Location>
                        <PLMN>XXX</PLMN>
                        <LAC>01</LAC>
                        <UTRAN_CI >02</UTRAN_CI >
                        </N3GPP_Location>
        </ValidityArea>
<PLMN>XXX</PLMN>
</Policy>
<Policy>
        <RulePriority>1</RulePriority>
        <PrioritizedAccess>
                <AccessTechnology>1</AccessTechnology>
                <AccessNetworkPriority>1</AccessNetworkPriority>
        </PrioritizedAccess>
        <PrioritizedAccess>
                <AccessTechnology>3</AccessTechnology>
```

```
                    <AccessNetworkPriority>2</AccessNetworkPriority>

                </PrioritizedAccess>

            <ValidityArea>

                <N3GPP_Location>

                    <PLMN>XXX</PLMN>

                    <TAC>01</LAC>

                    <EUTRAN_CI >02</EUTRAN_CI >

                </N3GPP_Location>

            </ValidityArea>

            <PLMN>XXX</PLMN>

        </Policy>
```

Dans ce fichier, la première règle s'applique aux technologies d'accès 2G et donne priorité à un premier réseau wifi (opérateur 1) par rapport à un deuxième réseau wifi (opérateur 2), lui-même prioritaire sur les réseaux 2G. La deuxième règle s'applique aux technologies 3G et donne priorité à un premier réseau wifi (opérateur 1) par rapport aux technologies 3G, elles-mêmes prioritaires par rapport à un deuxième réseau wifi (opérateur 2). La troisième règle s'applique aux technologies 4G et donne priorité à celles-ci sur tout réseau wifi, indépendamment de leur opérateur. La condition d'applicabilité de chaque règle est déterminé au moyen des indicateurs de validité **<GERAN_CI >01</GERAN_CI>, <UTRAN_CI >02</UTRAN_CI >** et **<EUTRAN_CI >02</EUTRAN_CI>.**

En variante, au lieu d'insérer dans les règles de sélection un indicateur de validité désignant directement la technologie d'accès cellulaire conditionnant l'application de la règle, il est possible d'insérer un indicateur de validité désignant un intervalle de débit pour lequel ladite règle est applicable, ce qui permet indirectement un conditionnement de la règle par rapport à une technologie d'accès donnée, sans avoir à déterminer directement cette technologie d'accès, puisque les technologies d'accès cellulaire offre des débits distincts les uns des autres. Ceci permet également de prendre en compte le débit de transmission réel. A titre d'exemple, un réseau H+ qui, à un moment donné, offre seulement un débit de 1 Mb/s peut être déprioisé par rapport à un réseau Wi-Fi.

Dans une telle variante, le procédé comprend alors en outre la détermination par le terminal mobile d'un débit de transmission disponible au moyen de la technologie d'accès cellulaire utilisée par le réseau d'accès cellulaire détecté. Une fois ce débit déterminé, la sélection du réseau d'accès se fait en appliquant la règle de sélection dont l'intervalle de débit comprend le débit de transmission déterminé, en d'autres termes la règle de sélection applicable pour ce débit de transmission.

Ceci permet de conditionner les règles de sélection en fonction du débit réellement offert par le réseau d'accès cellulaire disponible, dans la position courante du terminal mobile, et à un instant donné, et donc de prendre en compte les cas où ce débit est significativement inférieur au débit théorique de la technologie utilisée.

Ceci permet également de conditionner les règles de sélection même lorsque l'information sur la technologie d'accès cellulaire disponible, dans la position courante du terminal mobile, n'est pas ou accessible, par exemple parce que la logique de sélection est mise en oeuvre dans une application qui n'a pas accès aux informations relatives à la couche radio du terminal.

Il est possible d'envisager un autre cas de figure où le terminal mobile UE détecte, dans sa position courante, plusieurs réseaux d'accès cellulaires lui proposant plusieurs technologies d'accès cellulaire distinctes qu'il peut sélectionner. Dans un tel cas de figure, plusieurs règles de sélection peuvent être applicables.

Afin de résoudre ce conflit de règles, les règles de sélection peuvent être avantageusement classées par ordre de priorité. Ainsi, lorsque plusieurs règles de sélection sont déterminées comme étant applicables simultanément, le terminal mobile UE sélectionne alors, parmi ces règles applicables, la règle de sélection à appliquer, qui se trouve être typiquement la règle de sélection la plus prioritaire parmi les règles applicables envoyées par le dispositif de sélection 20. Le niveau de priorité d'une règle de sélection peut être indiqué par un champ « RulePriority », inséré dans chaque règle de sélection, comme défini dans la spécification 3GPP TS 24.312 et illustré par le fichier xml susmentionné.

Une fois la règle de sélection à appliquer déterminée, le terminal mobile UE utilise cette règle pour choisir le réseau d'accès auquel s'attacher, en sélectionnant le réseau d'accès le plus prioritaire selon cette règle de sélection parmi les réseaux d'accès détectés.

Ainsi, en reprenant l'exemple précédent et en considérant que la règle de sélection 1 est prioritaire par rapport à la règle de sélection 2 elle-même prioritaire par rapport à la règle de sélection 3, lorsque le terminal mobile UE se trouve sous la couverture d'un réseau 4G, d'un réseau 2G et d'un réseau Wifi communautaire, les règles de sélection 1 et 3 sont applicables, et c'est la règle de sélection 1 qui s'applique prioritairement parmi ces règles, conduisant à la sélection du réseau 4G pour l'attachement du terminal UE. Lorsque, après s'être déplacé par exemple, le terminal mobile UE ne détecte plus de réseau 4G mais continue à être dans la couverture du réseau 2G et du réseau Wifi communautaire, la règle de sélection 3 devient applicable, conduisant à la sélection du réseau Wifi communautaire pour l'attachement du terminal UE.

L'invention n'est pas limitée au procédé de sélection décrit précédemment, mais concerne également un terminal mobile UE et un dispositif de sélection 20 agencé pour envoyer au moins une règle de sélection à un terminal mobile UE, ladite au moins une règle de sélection étant destinée à assister le terminal mobile dans sa sélection d'un réseau d'accès auquel s'attacher pour accéder à un réseau de communication 30.

Le dispositif de sélection 20 comprend notamment, outre une interface réseau, un module de traitement configuré pour générer ladite au moins une règle de sélection de réseau d'accès en classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire utilisant une technologie d'accès non cellulaire sans fil.

Le terminal mobile UE est apte à recevoir, en provenance d'un dispositif de sélection 20 de réseaux d'accès, au moins une règle de sélection de réseau d'accès classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire utilisant une technologie d'accès non cellulaire sans fil.

Le terminal mobile UE comprend notamment, outre une première interface radio et une deuxième interface radio, un module de traitement configuré pour sélectionner, parmi au moins un réseau d'accès non cellulaire sans fil et au moins un réseau d'accès cellulaire détectés par ledit terminal, le réseau d'accès le plus prioritaire selon ladite au moins une règle de sélection appliquée en fonction de la technologie d'accès cellulaire du réseau d'accès sans fil détecté.

Les termes « modules » peuvent correspondre, dans ce document, aussi bien à un composant logiciel qu'à un composant matériel, apte à mettre en oeuvre une fonction ou un ensemble de fonction selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire, puis chargé et exécuté par un processeur de données d'une entité physique, et est susceptible d'accéder aux ressources matérielles de cette entité physique (mémoires, supports d'enregistrement, bus de communication, interfaces).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware, etc.).

Dans un mode de réalisation particulier, les modules de traitement susmentionnés sont agencés pour mettre en oeuvre les procédés décrits précédemment, côté dispositif de sélection 2à et côté terminal mobile. Il s'agit de préférence de modules logiciels comprenant des instructions logicielles pour faire exécuter les étapes des procédés décrit précédemment. L'invention concerne donc aussi :

- un programme d'ordinateur, pour la sélection d'un réseau d'accès, comprenant des instructions de code pour commander l'exécution des étapes effectuées du côté du terminal mobile UE dans le procédé de sélection de réseau d'accès décrit précédemment ;
- un support d'enregistrement, lisible par un terminal mobile, sur lequel est enregistré ce programme pour la sélection d'un réseau d'accès ;
- un programme d'ordinateur, pour l'assistance à la sélection d'un réseau d'accès, comprenant des instructions de code pour commander l'exécution des étapes effectuées du côté du dispositif de sélection 20 dans le procédé de sélection de réseau d'accès décrit précédemment.
- un support d'enregistrement, lisible par un dispositif de sélection, sur lequel est enregistré ce programme pour l'assistance à la sélection d'un réseau d'accès.

Ces modules logiciels peuvent être stockés dans ou transmis par un support de données, qui peut être un support matériel de stockage (par exemple un CD-ROM, une clé USB, une carte mémoire ou un disque dur), ou bien un support de transmission tel qu'un signal électrique, optique ou radio, voire un réseau de télécommunications.

**Revendications**

1. Procédé de sélection d'un réseau d'accès par l'intermédiaire duquel un terminal mobile (UE) accède à un réseau de communication (30), comprenant les étapes suivantes, mises en oeuvre par le terminal mobile :

   obtention (S1), en provenance d'un dispositif de sélection de réseaux d'accès (20), d'au moins une règle de sélection de réseaux d'accès classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire sans fil ;
   détection (S2) d'au moins un réseau d'accès non cellulaire sans fil et d'au moins un réseau d'accès cellulaire auxquels le terminal mobile peut s'attacher ; et
   sélection (S4) du réseau d'accès le plus prioritaire, parmi les réseaux d'accès détectés, selon ladite au moins une règle de sélection appliquée en fonction de la technologie d'accès cellulaire du réseau d'accès cellulaire détecté.

2. Procédé selon la revendication 1, dans lequel le terminal mobile obtient une pluralité de règles de sélection comprenant au moins une règle de sélection classant un réseau d'accès cellulaire utilisant la première technologie d'accès cellulaire par rapport à au moins un desdits réseaux d'accès non cellulaire et une règle de sélection classant un réseau d'accès cellulaire utilisant la deuxième technologie d'accès cellulaire par rapport à au moins un desdits réseaux d'accès non cellulaire, le procédé comprenant en outre la sélection, parmi lesdites règles de sélection, d'une règle de sélection à appliquer lors de la sélection du réseau d'accès en fonction de la technologie d'accès cellulaire du réseau d'accès cellulaire détecté.

3. Procédé selon la revendication 2, dans lequel chacune desdites règles de sélection comprend un indicateur de validité désignant la technologie d'accès cellulaire utilisée par le réseau d'accès cellulaire classé dans ladite règle de sélection, la sélection du réseau d'accès se faisant en appliquant la règle de sélection dont l'indicateur de validité correspond à la technologie d'accès utilisée par le réseau d'accès cellulaire détecté.

4. Procédé selon la revendication 2, dans lequel chacune desdites règles de sélection comprend un indicateur de validité désignant un intervalle de débit pour lequel ladite règle est applicable, le procédé comprenant en outre la détermination par le terminal mobile d'un débit de transmission disponible au moyen de la technologie d'accès cellulaire utilisée par le réseau d'accès cellulaire détecté, la sélection du réseau d'accès se faisant en appliquant la règle de sélection dont l'intervalle de débit comprend le débit de transmission déterminé.

5. Procédé selon la revendication 2, dans lequel lesdites règles de sélection sont classées selon un ordre de priorité déterminé par le dispositif de sélection (20), la règle de sélection la plus prioritaire étant utilisée par le terminal mobile lorsqu'il sélectionne un réseau d'accès parmi une pluralité de réseaux d'accès cellulaires détectés.

6. Procédé selon la revendication 1, dans lequel ladite au moins une règle de sélection consiste en une règle unique de sélection classant, par ordre de priorité, l'ensemble desdits réseaux d'accès.

7. Procédé selon les revendications 1 à 6, dans lequel l'ordre de priorité des réseaux d'accès classés dans ladite au moins une règle de sélection est fonction des débits respectivement associés aux technologies d'accès utilisées par lesdits réseaux d'accès.

8. Procédé selon l'une des revendications 1 à 7, dans lequel l'ordre de priorité des réseaux d'accès classés dans ladite au moins une règle de sélection est fonction d'informations de congestion transmises au dispositif de sélection de réseaux d'accès par des points d'accès desdits réseaux d'accès.

9. Procédé selon l'une des revendications précédentes, dans lequel l'étape de sélection (S4) est mise en oeuvre après la détermination d'un changement de technologie d'accès cellulaire utilisée par un des réseaux cellulaires détectés.

10. Procédé selon l'une des revendications précédentes, dans lequel les technologies d'accès cellulaires appartiennent au groupe suivant : 2G (GERAN), 3G (UTRAN), 4G (E-UTRAN).

11. Procédé selon l'une des revendications précédentes, dans lequel les technologies d'accès cellulaires appartiennent au groupe suivant : IS95A, IS95B, EDGE, GPRS, HSDPA, HSPA, HSPA+, HSUPA, LTE, UMTS.

12. Procédé d'assistance à la sélection, par un terminal mobile (UE), d'un réseau d'accès à utiliser pour accéder à un réseau de communication (20), comprenant les étapes suivantes :

génération d'au moins une règle de sélection de réseau d'accès classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire utilisant une technologie d'accès non cellulaire sans fil; et
envoi de ladite au moins une règle de sélection au terminal mobile, ladite au moins une règle de sélection étant destinée à être utilisée par ledit terminal mobile lors de la sélection d'un réseau d'accès auquel s'attacher.

13. Terminal mobile (UE) apte à recevoir, en provenance d'un dispositif de sélection (20) de réseaux d'accès, au moins une règle de sélection de réseau d'accès classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire utilisant une technologie d'accès non cellulaire sans fil, **caractérisé en ce qu'**il comprend un module de traitement configuré pour sélectionner, parmi au moins un réseau d'accès non cellulaire sans fil et au moins un réseau d'accès cellulaire détectés par ledit terminal, le réseau d'accès le plus prioritaire selon ladite au moins une règle de sélection appliquée en fonction de la technologie d'accès cellulaire du réseau d'accès cellulaire détecté.

14. Dispositif de sélection de réseaux d'accès (20), agencé pour envoyer au moins une règle de sélection à un terminal mobile (UE), ladite au moins une règle de sélection étant destinée à assister le terminal mobile dans sa sélection d'un réseau d'accès auquel s'attacher pour accéder à un réseau de communication (30), caractérisé ce qu'il comprend un module de traitement configuré pour générer ladite au moins une règle de sélection de réseau d'accès en classant, selon un ordre de priorité, une pluralité de réseaux d'accès comprenant un réseau d'accès cellulaire utilisant une première technologie d'accès cellulaire, un réseau d'accès cellulaire utilisant une deuxième technologie d'accès cellulaire et au moins un réseau d'accès non cellulaire utilisant une technologie d'accès non cellulaire sans fil.

15. Programme d'ordinateur comprenant des instructions de code pour l'exécution des étapes d'un procédé selon l'une des revendications 1 à 12, lorsque ledit programme d'ordinateur est exécuté par un processeur.

**Patentansprüche**

1. Verfahren zur Auswahl eines Zugangsnetzes, mittels dessen ein mobiles Endgerät (UE) auf ein Kommunikationsnetz (30) zugreift, das die folgenden Schritte enthält, die vom mobilen Endgerät durchgeführt werden:

Erhalt (S1), ausgehend von einer Auswahlvorrichtung von Zugangsnetzen (20), mindestens einer Auswahlregel von Zugangsnetzen, die gemäß einer Prioritätsreihenfolge eine Vielzahl von Zugangsnetzen klassifiziert, die ein eine erste zellulare Zugangstechnologie verwendendes zellulares Zugangsnetz, ein eine zweite zellulare Zugangstechnologie verwendendes zellulares Zugangsnetz und mindestens ein drahtloses, nicht zellulares Zugangsnetz enthält,
Erfassung (S2) mindestens eines drahtlosen, nicht-zellularen Zugangsnetzes und mindestens eines zellularen Zugangsnetzes, mit denen das mobile Endgerät sich verbinden kann; und
Auswahl (S4) des Zugangsnetzes mit der höchsten Priorität unter den erfassten Zugangsnetzen gemäß der mindestens einen abhängig von der zellularen Zugangstechnologie des erfassten zellularen Zugangsnetzes angewendeten Auswahlregel.

2. Verfahren nach Anspruch 1, wobei das mobile Endgerät eine Vielzahl von Auswahlregeln erhält, die mindestens eine Auswahlregel, die ein die erste zellulare Zugangstechnologie verwendendes zellulares Zugangsnetz bezüglich mindestens eines der nicht zellularen Zugangsnetze klassifiziert, und eine Auswahlregel enthält, die ein die zweite zellulare Zugangstechnologie verwendendes zellulares Zugangsnetz bezüglich mindestens eines der nicht zellularen Zugangsnetze klassifiziert, wobei das Verfahren außerdem die Auswahl unter den Auswahlregeln einer Auswahlregel enthält, die bei der Auswahl des Zugangsnetzes abhängig von der zellularen Zugangstechnologie des erfassten zellularen Zugangsnetzes anzuwenden ist.

3. Verfahren nach Anspruch 2, wobei jede der Auswahlregeln einen Gültigkeitsindikator enthält, der die vom in der Auswahlregel klassifizierten zellularen Zugangsnetz verwendete zellulare Zugangstechnologie bezeichnet, wobei die Auswahl des Zugangsnetzes erfolgt, indem die Auswahlregel angewendet wird, deren Gültigkeitsindikator der vom erfassten zellularen Zugangsnetz verwendeten Zugangstechnologie entspricht.

4. Verfahren nach Anspruch 2, wobei jede der Auswahlregeln einen Gültigkeitsindikator enthält, der ein Durchsatzintervall anzeigt, für das die Regel anwendbar ist, wobei das Verfahren außerdem die Bestimmung durch das mobile Endgerät eines verfügbaren Übertragungsdurchsatzes mittels der vom erfassten zellularen Zugangsnetz verwendeten zellularen Zugangstechnologie enthält, wobei die Auswahl des Zugangsnetzes erfolgt, indem die Auswahlregel angewendet wird, deren Durchsatzintervall den bestimmten Übertragungsdurchsatz enthält.

5. Verfahren nach Anspruch 2, wobei die Auswahlregeln gemäß einer von der Auswahlvorrichtung (20) bestimmten Prioritätsreihenfolge klassifiziert werden, wobei die Auswahlregel mit höchster Priorität vom mobilen Endgerät verwendet wird, wenn es ein Zugangsnetz unter einer Vielzahl von erfassten zellularen Zugangsnetzen auswählt.

6. Verfahren nach Anspruch 1, wobei die mindestens eine Auswahlregel aus einer einzigen Auswahlregel besteht, die die Gesamtheit der Zugangsnetze nach der Prioritätsreihenfolge klassifiziert.

7. Verfahren nach den Ansprüchen 1 bis 6, wobei die Prioritätsreihenfolge der in der mindestens einen Auswahlregel klassifizierten Zugangsnetze von den Durchsätzen abhängt, die den von den Zugangsnetzen verwendeten Zugangstechnologien zugeordnet sind.

8. Verfahren nach einem der Ansprüche 1 bis 7, wobei die Prioritätsreihenfolge der in der mindestens einen Auswahlregel klassifizierten Zugangsnetze von Überlastungsinformationen abhängt, die von Zugangspunkten der Zugangsnetze an die Auswahlvorrichtung von Zugangsnetzen übertragen werden.

9. Verfahren nach einem der vorhergehenden Ansprüche, wobei der Auswahlschritt (S4) nach der Bestimmung einer Änderung der von einem der erfassten zellularen Netze verwendeten zellularen Zugangstechnologie durchgeführt wird.

10. Verfahren nach einem der vorhergehenden Ansprüche, wobei die zellularen Zugangstechnologien zur folgenden Gruppe gehören: 2G (GERAN), 3G (UTRAN), 4G (E-UTRAN).

11. Verfahren nach einem der vorhergehenden Ansprüche, wobei die zellularen Zugangstechnologien zur folgenden Gruppe gehören: IS95A, IS95B, EDGE, GPRS, HSDPA, HSPA, HSPA+, HSUPA, LTE, UMTS.

12. Verfahren zur Unterstützung der Auswahl, durch ein mobiles Endgerät (UE), eines Zugangsnetzes, das zu verwenden ist, um auf ein Kommunikationsnetz (20) zuzugreifen, das die folgenden Schritte enthält:

Generierung mindestens einer Zugangsnetz-Auswahlregel, die gemäß einer Prioritätsreihenfolge eine Vielzahl von Zugangsnetzen klassifiziert, die ein eine erste zellulare Zugangstechnologie verwendendes zellulares Zugangsnetz, ein eine zweite zellulare Zugangstechnologie verwendendes zellulares Zugangsnetz und mindestens ein nicht zellulares Zugangsnetz enthält, das eine drahtlose, nicht zellulare Zugangstechnologie verwendet; und
Senden der mindestens einen Auswahlregel an das mobile Endgerät, wobei die mindestens eine Auswahlregel dazu bestimmt ist, vom mobilen Endgerät bei der Auswahl eines Zugangsnetzes, mit dem es sich verbinden soll, verwendet zu werden.

13. Mobiles Endgerät (UE), das ausgehend von einer Auswahlvorrichtung (20) von Zugangsnetzen mindestens eine Zugangsnetz-Auswahlregel empfangen kann, die gemäß einer Prioritätsreihenfolge eine Vielzahl von Zugangsnetzen klassifiziert, die ein eine erste zellulare Zugangstechnologie verwendendes zellulares Zugangsnetz, ein eine zweite zellulare Zugangstechnologie verwendendes zellulares Zugangsnetz und mindestens ein nicht zellulares Zugangsnetz enthält, das eine drahtlose, nicht zellulare Zugangstechnologie verwendet, **dadurch gekennzeichnet, dass** es ein Verarbeitungsmodul enthält, das konfiguriert ist, unter mindestens einem drahtlosen, nicht zellularen Zugangsnetz und mindestens einem zellularen Zugangsnetz, die vom Endgerät erfasst werden, das Zugangsnetz mit höchster Priorität gemäß der mindestens einen abhängig von der zellularen Zugangstechnologie des erfassten zellularen Zugangsnetzes angewendeten Auswahlregel auszuwählen.

14. Auswahlvorrichtung von Zugangsnetzen (20), die eingerichtet ist, um mindestens eine Auswahlregel an ein mobiles Endgerät (UE) zu senden, wobei die mindestens eine Auswahlregel dazu bestimmt ist, das mobile Endgerät bei seiner Auswahl eines Zugangsnetzes zu unterstützen, mit dem es sich verbinden muss, um auf ein Kommunikationsnetz (30) zuzugreifen, **dadurch gekennzeichnet, dass** sie ein Verarbeitungsmodul enthält, das konfiguriert ist, die mindestens eine Zugangsnetz-Auswahlregel zu generieren, indem gemäß einer Prioritätsreihenfolge eine Vielzahl von Zugangsnetzen klassifiziert wird, die ein eine erste zellulare Zugangstechnologie verwendendes zellulares Zugangsnetz, ein eine zweite zellulare Zugangstechnologie verwendendes zellulares Zugangsnetz und mindestens ein nicht zellulares Zugangsnetz enthält, das eine drahtlose, nicht zellulare Zugangstechnologie verwendet.

15. Computerprogramm, das Codeanweisungen für die Ausführung der Schritte eines Verfahrens nach einem der Ansprüche 1 bis 12 enthält, wenn das Computerprogramm von einem Prozessor ausgeführt wird.

**Claims**

1. Method for selecting an access network by way of which a mobile terminal (UE) accesses a communication network (30), comprising the following steps, implemented by the mobile terminal:

   obtaining (S1), from a device for selecting access networks (20), of at least one rule for selecting access networks ranking, according to an order of priority, a plurality of access networks comprising a cellular access network using a first cellular access technology, a cellular access network using a second cellular access technology and at least one wireless non-cellular access network;
   detection (S2) of at least one wireless non-cellular access network and of at least one cellular access network to which networks the mobile terminal can attach itself; and
   selection (S4) of the highest priority access network, from among the access networks detected, according to said at least one selection rule applied as a function of the cellular access technology of the cellular access network detected.

2. Method according to Claim 1, in which the mobile terminal obtains a plurality of selection rules comprising at least one selection rule ranking a cellular access network using the first cellular access technology with respect to at least one of said non-cellular access networks and a selection rule ranking a cellular access network using the second cellular access technology with respect to at least one of said non-cellular access networks, the method furthermore comprising the selection, from among said selection rules, of a selection rule to be applied during the selection of the access network as a function of the cellular access technology of the cellular access network detected.

3. Method according to Claim 2, in which each of said selection rules comprises a validity indicator designating the cellular access technology used by the cellular access network ranked in said selection rule, the selection of the access network being done by applying the selection rule whose validity indicator corresponds to the access technology used by the cellular access network detected.

4. Method according to Claim 2, in which each of said selection rules comprises a validity indicator designating a bitrate interval for which said rule is applicable, the method furthermore comprising the determination by the mobile terminal of a transmission bitrate available by means of the cellular access technology used by the cellular access network detected, the selection of the access network being done by applying the selection rule whose bitrate interval comprises the determined transmission bitrate.

5. Method according to Claim 2, in which said selection rules are ranked according to an order of priority determined by the selection device (20), the highest priority selection rule being used by the mobile terminal when the latter selects an access network from among a plurality of cellular access networks detected.

6. Method according to Claim 1, in which said at least one selection rule consists of a unique selection rule ranking, by order of priority, the set of said access networks.

7. Method according to Claims 1 to 6, in which the order of priority of the access networks ranked in said at least one selection rule is dependent on the bitrates respectively associated with the access technologies used by said access networks.

8. Method according to one of Claims 1 to 7, in which the order of priority of the access networks ranked in said at least one selection rule is dependent on congestion information transmitted to the device for selecting access networks by access points of said access networks.

9.  Method according to one of the preceding claims, in which the selection step (S4) is implemented after the determination of a change of cellular access technology used by one of the cellular networks detected.

10. Method according to one of the preceding claims, in which the cellular access technologies belong to the following group: 2G (GERAN), 3G (UTRAN), 4G (E-UTRAN).

11. Method according to one of the preceding claims, in which the cellular access technologies belong to the following group: IS95A, IS95B, EDGE, GPRS, HSDPA, HSPA, HSPA+, HSUPA, LTE, UMTS.

12. Method for assisting the selection, by a mobile terminal (UE), of an access network to be used to access a communication network (20), comprising the following steps:

    generation of at least one access network selection rule ranking, according to an order of priority, a plurality of access networks comprising a cellular access network using a first cellular access technology, a cellular access network using a second cellular access technology and at least one non-cellular access network using a wireless non-cellular access technology; and
    dispatching of said at least one selection rule to the mobile terminal, said at least one selection rule being intended to be used by said mobile terminal during the selection of an access network to which to attach itself.

13. Mobile terminal (UE) able to receive, from an access networks selection device (20), at least one access network selection rule ranking, according to an order of priority, a plurality of access networks comprising a cellular access network using a first cellular access technology, a cellular access network using a second cellular access technology and at least one non-cellular access network using a wireless non-cellular access technology, **characterized in that** it comprises a processing module configured to select, from among at least one wireless non-cellular access network and at least one cellular access network detected by said terminal, the highest priority access network according to said at least one selection rule applied as a function of the cellular access technology of the detected cellular access network.

14. Device for selecting access networks (20), designed to dispatch at least one selection rule to a mobile terminal (UE), said at least one selection rule being intended to assist the mobile terminal in its selection of an access network to which to attach itself so as to access a communication network (30), **characterized in that** it comprises a processing module configured to generate said at least one access network selection rule by ranking, according to an order of priority, a plurality of access networks comprising a cellular access network using a first cellular access technology, a cellular access network using a second cellular access technology and at least one non-cellular access network using a wireless non-cellular access technology.

15. Computer program comprising code instructions for the execution of the steps of a method according to one of Claims 1 to 12, when said computer program is executed by a processor.

FIG. 1

FIG. 2

FIG. 3

**EP 3 022 970 B1**

## RÉFÉRENCES CITÉES DANS LA DESCRIPTION

**Documents brevets cités dans la description**

- WO 2012092935 A